# EUROPEAN PATENT APPLICATION

(11) **EP 1 837 532 A1**
(43) Date of publication of application: **26.09.2007**
(21) Application number: 05824501.0
(22) Date of filing: 28.12.2005
(51) Int. Cl.: F16B 31/02

(54) **AXIAL FORCE CONTROLLING NUT ASSEMBLY**

(30) Priority: 11.01.2005 JP 2005004147; 27.12.2005 JP 2005374669
(71) Applicant: Topy Kogyo Kabushiki Kaisha, Tokyo 102-8448 (JP)
(72) Inventor: MARUYAMA, Saburo, c/o TOPY KOGYO KABUSHIKI KAISHA, Tokyo 1028448 (JP); KIMURA, Yoshiaki, c/o TOPY KOGYO KABUSHIKI KAISHA,, Tokyo 1028448 (JP); MIYASHITA, Satoru, c/o TOPY KOGYO KABUSHIKI KAISHA, Tokyo 1028448 (JP); KODAMA, Shoichiro, c/o TOPY KOGYO KABUSHIKI KAISHA, Tokyo 1028448 (JP)
(74) Representative: Paget, Hugh Charles Edward
(86) International application number: PCT/JP2005/024278
(87) International publication number: WO 2006/075541

(57) **Abstract**

An axial force control nut assembly 10 includes a seat member 11, a fastening nut 12 rotatable relative to the seat member and a ring assembly 13 disposed between the seat member and the fastening nut. The ring assembly 13 can include one or more rings. At least one of the rings is an axial force control ring 20 is freely rotatable before a bolt axial force reaches the proper axial force and is restricted in rotation after the bolt axial force is equal to or greater than proper axial force. Alternatively or in addition, the ring assembly 13 can include an elastic deformation ring 21. A gap is defined between a radially outer portion of the elastic deformation ring 21 and the seat member 11 before the bolt axial force reaches the proper axial force. The gap between the radially outer portion of the elastic deformation ring 21 and the seat member 11 becomes zero after the bolt axial force is equal to or greater than the proper axial force.

## Description

### Field of the Invention

The present invention relates to a nut assembly capable of controlling a bolt axial force on the basis of not a torque but an axial force, (hereinafter, an axial force control nut assembly).

### Background of the Invention

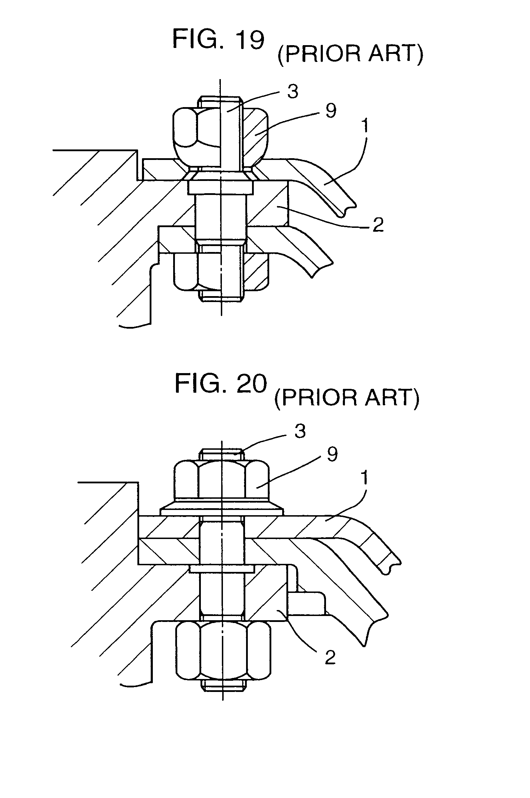

In a vehicle including a truck and a bus, as disclosed in Japanese Patent Publication HEI 11-351225, or as illustrated in FIG. 19 which illustrates a case of a spherical seat member or in FIG. 20 which illustrates a case of a flat seat member, a wheel (for example, a disk wheel) 1 is fixed to a hub 2 of a vehicle by a hub bolt 3 and a hub nut 9.

There are the following drawbacks with the conventional nut:
(a) Since the spherical seat member directly contacts a part to be fixed (for example, a disk wheel), when fastening the nut by applying a torque to the nut, the nut is rotated relative to the part, so that friction is generated at the contact surface.
   Due to the friction, transfer of the torque to a bolt axial force is disturbed. As a result, a bolt axial force corresponding to the torque may or may no be generated in the bolt, and an insufficient fastening may occur. The insufficient fastening may cause a crack in the part (disk wheel) and breakage of the bolt. In order to prevent the insufficient fastening, fastening the nut by an excessive fastening torque is often conducted in disregard of a normal fastening torque specified by a manufacture. Fastening using excessive fastening torque may cause breakage of the bolt.
   Further, due to the friction of the contact surface, surface roughing and abrasion of the nut seat surface of the wheel may initiate a crack of the wheel.
(b) In order to remove friction from the contact surface, Japanese Patent Publication HEI 11-351225 discloses a structure where a hub nut is axially divided into a fastening nut portion and a seat member portion, and the seat member is not rotated, rotating the fastening nut portion only. In the divided structure, in order to judge whether the fastening torque is a proper fastening torque or an excessive fastening torque, a rubber elastic member is inserted between the fastening nut portion and the seat member so that the fastening torque is transferred to an axial compression deformation and a radial bulging deformation of the elastic member. By examining the bulge of the elastic member, it is possible to judge whether the bolt axial force is proper or excessive. However, since the deformation amount of the elastic member is continuous and small, the examination requires skill and it is difficult to find a point where an increasing bolt axial force just reaches the proper bolt axial force.

### Disclosure of the Invention

An object of the present invention is to provide an axial force control nut assembly
(a) which can control a bolt axial force not by a torque but by an axial force, by causing a contact surface between the nut assembly and a part to be fastened not to rotate relative to the part, and can suppress a surface roughing and abrasion of the part, and further
(b) which is easy to accurately determine whether or not a bolt axial force reaches a proper axial force (and does not reach an excessive axial force, though the determination of the excessive axial force may not necessarily be conducted).

The present invention to achieve the above object is as follows:
(1) An axial force control nut assembly including:
   a seat member;
   a fastening nut rotatable relative to the seat member; and
   a ring assembly disposed between the seat member and the fastening nut.
(2) An axial force control nut assembly according to item (1) above, wherein the ring assembly includes a first axial force control ring which is free in rotation before a bolt axial force reaches a proper axial force and is restricted in rotation when or after the bolt axial force reaches the proper axial force.
(3) An axial force control nut assembly according to item (2) above, wherein the ring assembly includes an excessive axial force detecting structure for detecting that the bolt force reaches an excessive axial force which is larger than the proper axial force.
(4) An axial force control nut assembly according to item (2) above, further comprising a connecting structure which connects at least two members among at least a portion of the ring assembly, the seat member and the fastening nut so that the at least two members are not separated from each other.
(5) An axial force control nut assembly according to item (2) above, wherein the fastening nut includes a protrusion protruding toward the ring assembly and integral with the fastening nut.
(6) An axial force control nut assembly according to item (3) above, wherein the excessive axial force detecting structure includes a groove formed in the first axial force control ring, the first axial force control ring being broken at the groove when the bolt axial force reaches the excessive axial force, so that a portion of the first axial force control ring radially outside the groove is rotatable relative to a portion of the first axial force control ring radially inside the groove, whereby it is acknowledged that the bolt axial force has reached the excessive axial force.
(7) An axial force control nut assembly according to item (3) above, wherein the excessive axial force detecting structure includes a second axial force control ring which is free in rotation before the bolt axial force reaches the excessive axial force larger than the proper axial force and is restricted in rotation on or after the bolt force reaches the excessive axial force, the second axial force control ring being disposed apart from the first axial force control ring.
(8) An axial force control nut assembly according to item (3) above, wherein the excessive axial force detecting structure includes a second axial force control ring which is free in rotation before the bolt axial force reaches the excessive axial force larger than the proper axial force and is restricted in rotation on or after the bolt force reaches the excessive axial force, the second axial force control ring being disposed adjacent the first axial force control ring.
(9) An axial force control nut assembly according to Claim 3, wherein the excessive axial force detecting structure includes a second axial force control ring which is free in rotation before the bolt axial force reaches the excessive axial force larger than the proper axial force and is restricted in rotation on or after the bolt force reaches the excessive axial force, the second axial force control ring being disposed adjacent the first axial force control ring, and
   wherein the ring assembly includes an elastic deformation ring, the first axial force control ring and the second axial force control ring, wherein
   a first gap between the elastic deformation ring and the first axial force control ring becomes zero when the bolt axial force is equal to or greater than the proper axial force,
   a second gap between the first axial force control ring and the second axial force control ring becomes zero when bolt axial force is equal to or greater than the excessive axial force.
(10) An axial force control nut assembly according to Claim 9, wherein the second axial force control ring includes a seal ring groove formed in a surface of the second axial force control ring opposing the first axial force control ring and extending in an entire circumference, and the ring assembly further comprises an elastic seal ring being fit in the seal ring groove.
(11) An axial force control nut assembly according to item (4) above, wherein the connecting structure includes an axially extending portion which is formed in a radially inner portion of one of the members among at least a portion of the ring assembly, the seat member and the fastening nut, the axially extending portion axially extending to a radially inside a radially inner portion of an adjacent one of the members, the axially extending portion being deformed radially outwardly so that the axially extending portion axially engages with the radially inner portion of the adjacent one of the members.
(12) An axial force control nut assembly according to item (4) above, wherein the connecting structure includes: a concave portion formed at a surface of one of the members among at least a portion of the ring assembly, the seat member and the fastening nut; and a convex portion formed at a surface an adjacent one of the members, and
   wherein the concave portion has a narrowed inlet, the convex portion having a tip end greater in width than the inlet of the concave portion, the convex portion having a gap between the tip end and an inside surface of the concave portion, the convex portion being forcibly inserted into the concave portion by being imposed with an axial load.
(13) An axial force control nut assembly according to item (4) above, wherein the connecting structure includes:
   a radially inner protrusion and a radially outer protrusion formed at a surface of one of the members among at least a portion of the ring assembly, the seat member and the fastening nut and extending toward an adjacent one of the members; and
   a radially inner concave portion, a radially outer concave portion and a central protrusion, respectively, formed at a surface of the adjacent one of the members, the radially inner concave portion having a radially inner tapered surface, the radially outer concave portion having a radially outer tapered surface, the central protrusion being formed between the radially inner concave portion and the radially outer concave portion and extending axially toward the one of the members,
   wherein the radially inner tapered surface deforms the radially inner protrusion radially outwardly when the radially inner protrusion is pushed against the radially inner tapered surface, and the radially outer tapered surface deforms the radially outer protrusion radially inwardly when the radially outer protrusion is pushed against the radially outer tapered surface, a radial space between a tip of the radially inner protrusion and a tip of the radially outer protrusion after the radially inner protrusion and the radially outer protrusion are deformed is smaller than a radial width of a tip of the central protrusion.
(14) An axial force control nut assembly according to item (4) above, wherein the fastening nut includes a protruding portion protruding toward the ring assembly,
   the connecting structure connecting the ring assembly and the seat member so that the ring assembly and the seat member can not be disassembled and combining the ring assembly and the fastening nut so that the ring assembly and the fastening nut can not be disassembled.
(15) An axial force control nut assembly according to item (4) above, wherein the connecting structure includes:
   a radially outer protrusion and a radially inner concave formed at a surface of one of the members among at least a portion of the ring assembly, the seat member and the fastening nut, the radially outer protrusion extending toward an adjacent one of the members, the radially inner concave being formed radially inside the radially outer protrusion and having a radially inner tapered surface; and
   a radially inner protrusion and a radially outer concave formed at a surface of the adjacent one of the members, the radially inner protrusion extending toward the one of the adjacent members, the radially outner concave being formed radially outside the radially inner protrusion and having a radially outer tapered surface,
   wherein the radially inner tapered surface deforms the radially inner protrusion radially outwardly when the radially inner protrusion is pushed against the radially inner tapered surface, and the radially outer tapered surface deforms the radially outer protrusion radially inwardly when the radially outer protrusion is pushed against the radially outer tapered surface, a tip of the radially inner protrusion and a tip of the radially outer protrusion after the radially inner protrusion and the radially outer protrusion are deformed interfere with each other in an axial direction so that the one of the members and the adjacent one of the members can not be disassembled.
(16) An axial force control nut assembly according to item (4) above, wherein the connecting structure includes a connecting bar extending between the fastening nut and the seat member opposing each other via the ring assembly and connecting the fastening nut and the seat member,
   the fastening nut having a nut circumferential groove and the seat member having a seat member circumferential groove,
   the connecting bar including a connecting bar rod portion and a connecting bar end portion at each of opposite ends of the connecting bar rod portion, the connecting bar end portion extending radially outwardly more than an outside diameter of the connecting bar rod portion, one connecting bar end portion at one end of the connecting bar engaging with the nut circumferential groove, the other connecting bar end portion at the other end of the connecting bar engaging with the seat member circumferential groove.
(17) An axial force control nut assembly according to item (16) above, wherein the ring assembly includes an elastic deformation ring which has an axially penetrating hole between the an inside diameter and an outside diameter of the elastic deformation ring,
   the connecting bar penetrating the hole formed in the elastic deformation ring,
   opposite ends of the connecting bar being expanded by loading an axial force on the connecting bar.
(18) An axial force control nut assembly according to item (16) above, wherein the ring assembly includes an elastic deformation ring which has no axially penetrating hole between an inside diameter and an outside diameter of the elastic deformation ring,
   the connecting bar being divided into a first connecting bar portion and a second connecting bar portion, the first connecting bar portion being adhered to one surface of the elastic deformation ring, the second connecting bar portion being adhered to the other surface of the elastic deformation ring,
   opposite ends of the connecting bar being expanded by loading an axial force on the connecting bar.
(19) An axial force control nut assembly according to item (16) above, wherein the ring assembly includes an elastic deformation ring which has no axially penetrating hole between the an inside diameter and an outside diameter of the elastic deformation ring,
   the connecting bar holding the elastic deformation ring and being fixed to the elastic deformation ring, the connecting bar including a first connecting bar portion located on one side of the elastic deformation ring, a second connecting bar portion located on the other side of the elastic deformation ring, and a connecting portion connecting the first connecting bar portion and the second connecting bar portion, the connecting bar portions being formed by bending the first and second connecting bar portions.
(20) An axial force control nut assembly according to Claim 1, wherein the ring assembly includes an elastic deformation ring, wherein a gap exists between a radially outer portion of the elastic deformation ring and the seat member before the bolt axial force reaches the proper axial force, and the gap between the radially outer portion of the elastic deformation ring and the seat member becoming zero when the bolt axial force is equal or greater than the proper axial force.

According to the axial force control nut assembly according to item (1) above, since the hub nut includes the seat member and the fastening nut and the fastening nut is rotatable relative to the seat member, an axial force can be generated in the hub bolt maintaining the seat member unrotatable relative to a member to be fastened (for example, a wheel, but not limited to the wheel). As a result, the conventional control by torque is replaced by control by an axial force, so that a fastening control with a high accuracy not disturbed by friction between the seat member and the member to be fastened is possible. Further, since the seat member does not rotate relative to the member to be fastened and no friction is caused between the seat member and the member to be fastened, no surface roughing and no abrasion are caused in a nut seat surface of the member to be fastened, and cracking from the nut seat surface is reduced.

According to the axial force control nut assembly according to item (2) above, since the bolt axial force when the first axial force control ring stops rotation is set to be the proper bolt axial force, when imposing a torque on the fastening nut thereby increasing the bolt axial force, one need only examine whether or not the first axial force control ring is rotatable (by trying to rotate the ring by hand) and to stop fastening the fastening nut when it is found that the axial force control ring becomes unrotatable. The confirmation as to whether or not the first axial force control ring is rotatable is easier and higher in accuracy than the examination of the bulged amount of the rubber member.

According to the axial force control nut assembly according to item (3) above, since the ring assembly includes the excessive axial force detecting structure for detecting that the bolt force reaches the excessive axial force which is larger than the proper axial force, by rotating the fastening nut by a small rotational amount in a direction reverse to the fastening rotational direction when it is detected that the bolt axial force reaches the excessive axial force, an excessive axial force can be prevented from being loaded on the bolt.

According to the axial force control nut assembly according to item (4) above, since the axial force control nut assembly further includes the connecting structure which connects at least two members among the at least a portion of the ring assembly, the seat member and the fastening nut so that the at least two members are not separated from each other, missing or erroneous mounting of parts at a nut fastening stage can be prevented.

According to the axial force control nut assembly according to item (5) above, since the fastening nut includes the protrusion protruding toward the ring assembly, the number of parts can be decreased as compared with a case where another ring is required for the fastening nut to push the ring assembly.

According to the axial force control nut assembly according to item (6) above, since the excessive axial force detecting structure includes the groove formed in the first axial force control ring, the first axial force control ring will be broken at the groove when the bolt axial force reaches the excessive axial force. As a result, the portion of the first axial force control ring radially outside the groove becomes rotatable relative to the portion of the first axial force control ring radially inside the groove, whereby it can be acknowledged that the bolt axial force reaches the excessive axial force.

According to the axial force control nut assembly according to item (7) or (8) or (9) above, since the excessive axial force detecting structure includes the second axial force control ring which is free in rotation before the bolt axial force reaches the excessive axial force larger than the proper axial force and is restricted in rotation on or after the bolt force reaches the excessive axial force, it can be acknowledged that the bolt axial force reaches the excessive axial force by detecting whether or not rotation of the second axial force control ring is restricted.

According to the axial force control nut assembly according to item (9) above, since (a) the first gap existing between the elastic deformation ring and the first axial force control ring becomes zero when the bolt axial force is equal to or greater than the proper axial force, and (b) the second gap existing between the first axial force control ring and the second axial force control ring becomes zero when the bolt axial force is equal to or greater than the excessive axial force, a state where rotation of the first axial force control ring is restricted and rotation of the second axial force control ring is not restricted corresponds to a range of a proper bolt axial force. Therefore, it can be easily confirmed whether or not the bolt is in the range of the proper bolt axial force by detecting whether or not the first and second axial force control rings are rotatable.

According to the axial force control nut assembly according to item (10) above, since the second axial force control ring includes the seal ring groove formed in the surface of the second axial force control ring opposing the first axial force control ring and extending in the entire circumference, and the elastic seal ring is fit in the seal ring groove, water is prevented from entering the bolt thread portion through the second gap.

According to the axial force control nut assembly according to item (11) above, since the connecting structure includes the axially extending portion which is formed in the radially inner portion of one of the members among the at least a portion of the ring assembly, the seat member and the fastening nut, and the axially extending portion axially extends to the position radially inside the radially inner portion of the adjacent one of the members, parts of the axial force control nut assembly can be combined so that the parts are not disassembled to each other, by deforming the axially extending portion radially outwardly so that the axially extending portion axially engages with the radially inner portion of the adjacent one of the members.

According to the axial force control nut assembly according to item (12) above, since the connecting structure includes (a) the concave portion formed at the surface of one of the members among the at least a portion of the ring assembly, the seat member and the fastening nut, and having the narrowed inlet, and (b) the convex portion formed at the surface of the adjacent one of the members, and having the tip end greater in width than the inlet of the concave portion and having the gap between the tip end and the inside surface of the concave portion, parts of the axial force control nut assembly can be combined so that the parts are not disassembled to each other, by imposing an axial load on the convex portion so that the convex portion is forcibly inserted into the concave portion.

According to the axial force control nut assembly according to item (13) above, since the connecting structure includes:
(a) the radially inner protrusion and the radially outer protrusion formed at a surface of the one of the members among the at least a portion of the ring assembly, the seat member and the fastening nut; and
(b) the radially inner concave portion having the radially inner tapered surface, the radially outer concave portion having the radially outer tapered surface, and the central portion, respectively, formed in the adjacent one of the members,
   the radially inner tapered surface deforms the radially inner protrusion radially outwardly when the radially inner protrusion is pushed against the radially inner tapered surface, and the radially outer tapered surface deforms the radially outer protrusion radially inwardly when the radially outer protrusion is pushed against the radially outer tapered surface. By making a radial space between a tip of the radially inner protrusion and a tip of the radially outer protrusion smaller than a radial width of a tip of the central protrusion, parts of the axial force control nut assembly can be combined so that the parts are not disassembled to each other.

According to the axial force control nut assembly according to item (14) above, since the fastening nut includes a protruding portion protruding toward the ring assembly, the number of parts can be decreased as compared with a case where another ring is required for the fastening nut to push the ring assembly.

Further, since the connecting structures not only connect the ring assembly and the seat member so that the ring assembly and the seat member are not disassembled, but also connects the ring assembly and the fastening nut so that the ring assembly and the fastening nut are not disassembled, all parts of the axial force control nut assembly including the ring assembly, the seat member and the fastening nut can be assembled in the axial direction.

According to the axial force control nut assembly according to item (15) above, since the connecting structure includes:
(a) the radially outer protrusion and the radially inner concave formed at the surface of the one of the members, the radially outer protrusion extending toward the adjacent one of the members, the radially inner concave being formed radially inside the radially outer protrusion and having the radially inner tapered surface; and
(b) the radially inner protrusion and the radially outer concave formed at the surface of the adjacent one of the members, the radially inner protrusion extending toward the one of the members, the radially outner concave being formed radially outside the radially inner protrusion and having a radially outer tapered surface,
   the radially inner tapered surface deforms the radially inner protrusion radially outwardly when the radially inner protrusion is pushed against the radially inner tapered surface, and the radially outer tapered surface deforms the radially outer protrusion radially inwardly when the radially outer protrusion is pushed against the radially outer tapered surface. As a result, the tip of the radially inner protrusion and the tip of the radially outer protrusion after the radially inner protrusion and the radially outer protrusion are deformed to interfere with each other in the axial direction, so that the one of the members and the adjacent one of the members are not disassembled.

According to the axial force control nut assembly according to item (16) above, since the connecting structure includes the connecting bar extending between the fastening nut and the seat member opposing each other via the ring assembly and connecting the fastening nut and the seat member, parts including the fastening nut, the seat member and the ring assembly are connected by the connecting bar so that the parts are not disassembled to each other.

According to the axial force control nut assembly according to item (17) above, since the opposite ends of the connecting bar are bulged by loading an axial force on the connecting bar, mounting of the connecting bar to the axial force control nut assembly is easy.

According to the axial force control nut assembly according to items (18) and (19) above, since the ring assembly includes the elastic deformation ring which has no axially penetrating hole between the inside diameter and the outside diameter of the elastic deformation ring, when the elastic deformation ring receives a load and is deformed to generate a stress therein, stress concentration around the hole caused in the case where the hole exists is not caused, so that the elastic deformation ring is not broken due to such stress concentration and therefore the strength is improved.

According to the axial force control nut assembly according to item (20) above, since the ring assembly includes the elastic deformation ring and the configuration, elasticity and a gap between the elastic deformation ring and the seat member are determined such that a gap exists between the radially outer portion of the elastic deformation ring and the seat member before the bolt axial force reaches the proper axial force and the gap existing between the radially outer portion of the elastic deformation ring and the seat member becomes zero when the bolt axial force is equal or greater than the proper axial force, the first axial force control ring and the second axial force control ring can be removed whereby the ring assembly can be simplified. Further, it can be confirmed whether or not the bolt fastening force reaches the proper axial force by confirming whether or not the gap between the radially outer portion of the elastic deformation ring and the seat member becomes zero.

### Brief Description of the Drawings

The objects and features of the present invention will become more apparent by the following detailed description of the preferred embodiments illustrated by the following accompanying drawings.
FIG. 1 is a cross-sectional view of an axial force control nut assembly and a structure of a vicinity thereof according to Embodiment 1 of the present invention.
FIG. 2 is a cross-sectional view of an axial force control nut assembly and a structure of a vicinity thereof according to Embodiment 2 of the present invention.
FIG. 3 is a cross-sectional view of an axial force control nut assembly and a structure of a vicinity thereof according to Embodiment 3 of the present invention.
FIG. 4 is a cross-sectional view of an axial force control nut assembly and a structure of a vicinity thereof according to Embodiment 4 of the present invention.
FIG. 5 is a cross-sectional view of a connecting structure B in FIG. 4.
FIG. 6 is a cross-sectional view of an axial force control nut assembly and a structure of a vicinity thereof according to Embodiment 5 of the present invention.
FIG. 7 is a cross-sectional view of a connecting structure B in FIG. 6.
FIG. 8 is a cross-sectional view of an axial force control nut assembly and a structure of a vicinity thereof according to Embodiment 6 of the present invention.
FIG. 9 is a cross-sectional view of an axial force control nut assembly and a structure of a vicinity thereof according to Embodiment 7 of the present invention.
FIG. 10 is a cross-sectional view of a connecting structure B in FIG. 9.
FIG. 11 is a cross-sectional view of an axial force control nut assembly and a structure of a vicinity thereof according to Embodiment 8 of the present invention.
FIG. 12 is a plan view of an elastic deformation ring of the axial force control nut assembly according to Embodiment 8 of the present invention.
FIG. 13 is a side elevational view of a connecting bar, a part of which is shown in a cross-section, of the axial force control nut assembly according to Embodiment 8 of the present invention.
FIG. 14 is a side elevational view of an alteration, a part of which is shown in a cross-section, of the connecting bar of the axial force control nut assembly according to Embodiment 8 of the present invention (Alteration 1 of Embodiment 8).
FIG. 15 is a side elevational view of another alteration, a part of which is shown in a cross-section, of the connecting bar of the axial force control nut assembly according to Embodiment 8 of the present invention (Alteration 2 of Embodiment 8).
FIG. 16 is a cross-sectional view of an axial force control nut assembly and a structure of a vicinity thereof according to Embodiment 9 of the present invention.
FIG. 17 is a cross-sectional view of the axial force control nut assembly in a case where a protrusion is formed in a fastening nut thereby decreasing a number of parts of a ring assembly, in Embodiments 1 - 9 of the present invention.
FIG. 18 is a plan view of the axial force control nut assembly according to Embodiments 1 - 9 of the present invention.
FIG. 19 is a cross-sectional view of a conventional hub nut (having a spherical seat) for a single wheel.
FIG. 20 is a cross-sectional view of a conventional hub nut (having a flat seat) for a single wheel.

### Preferred Embodiments of the Present Invention

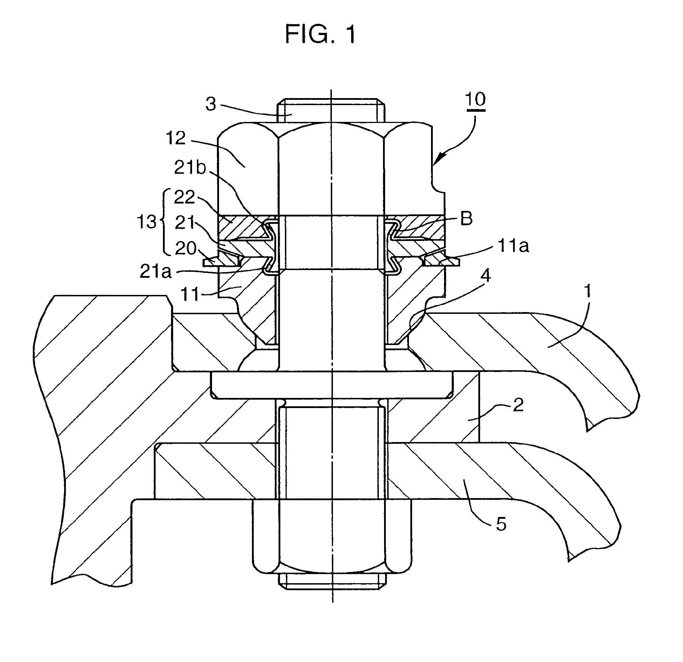

An axial force control nut assembly according to the present invention will be explained with reference to FIGS. 1-18.

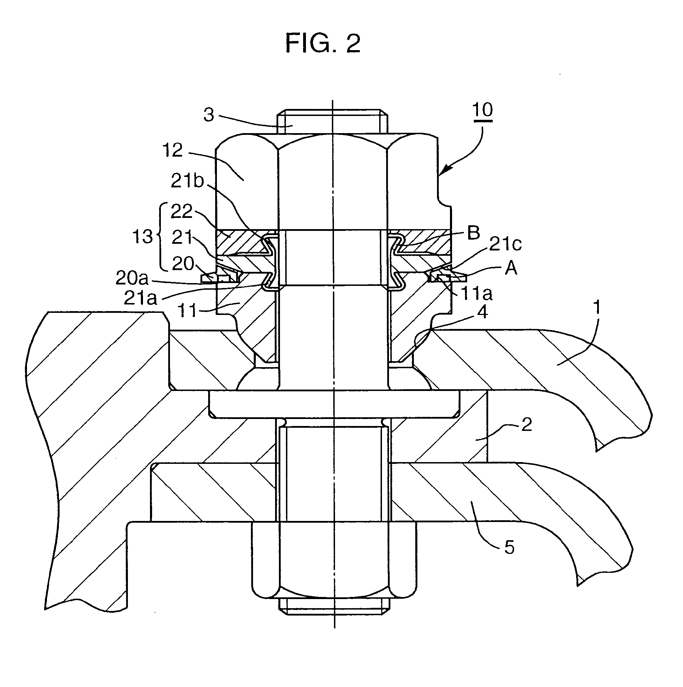

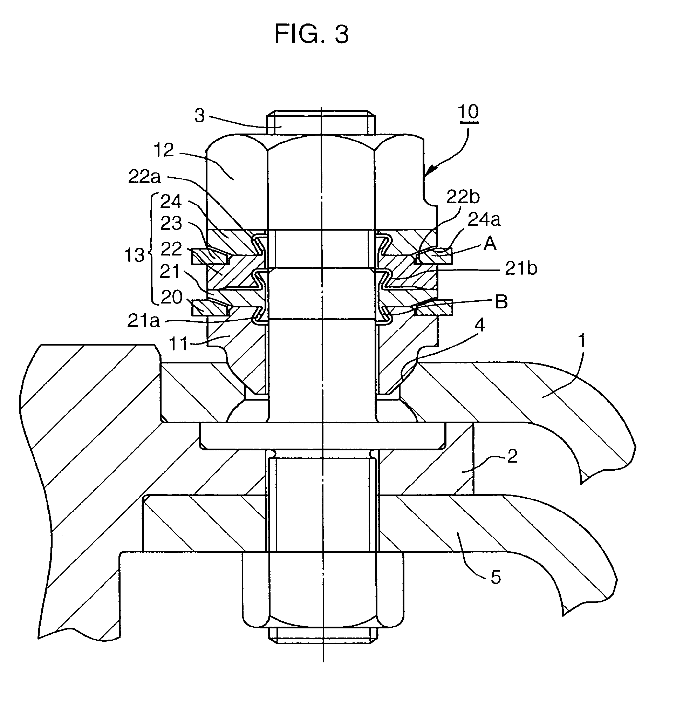

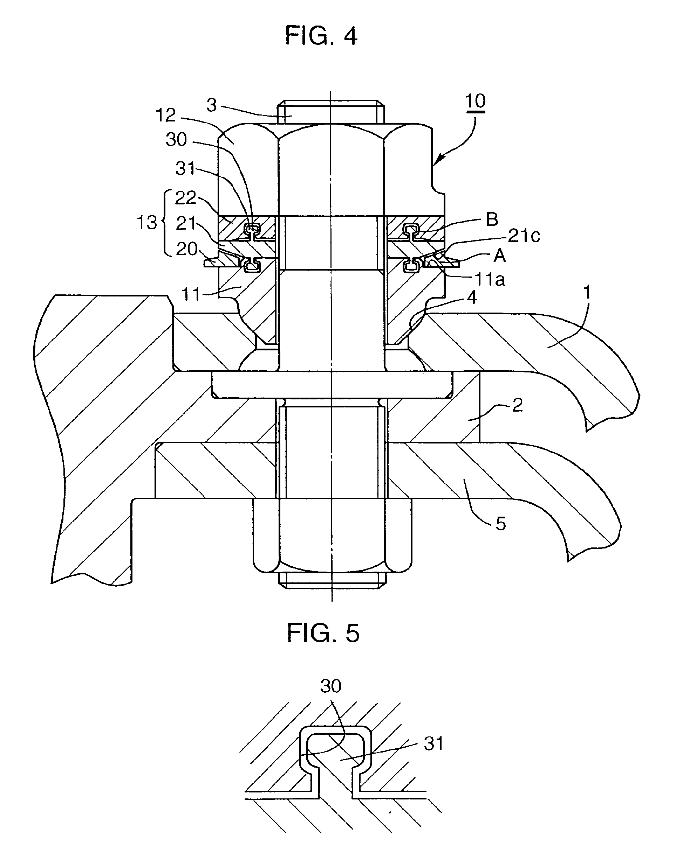

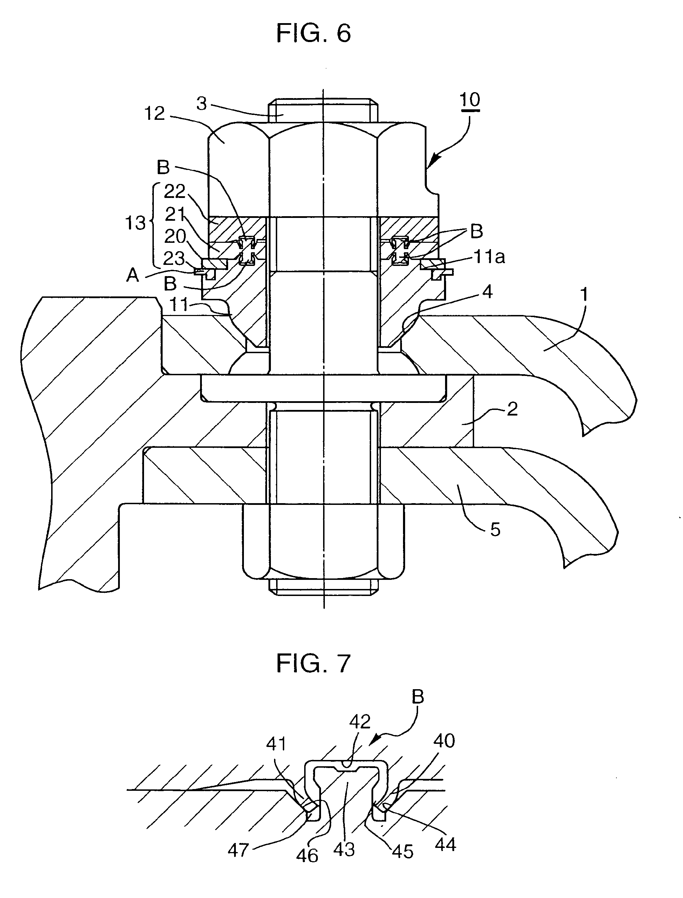

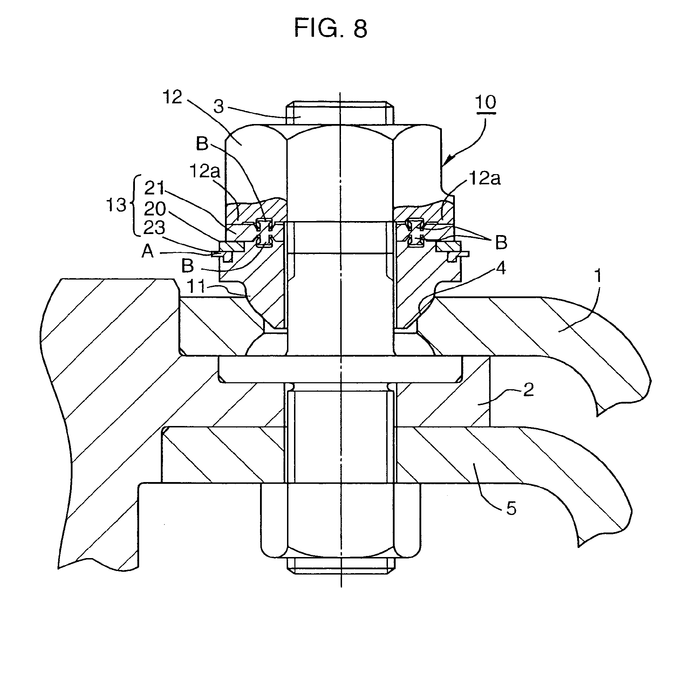

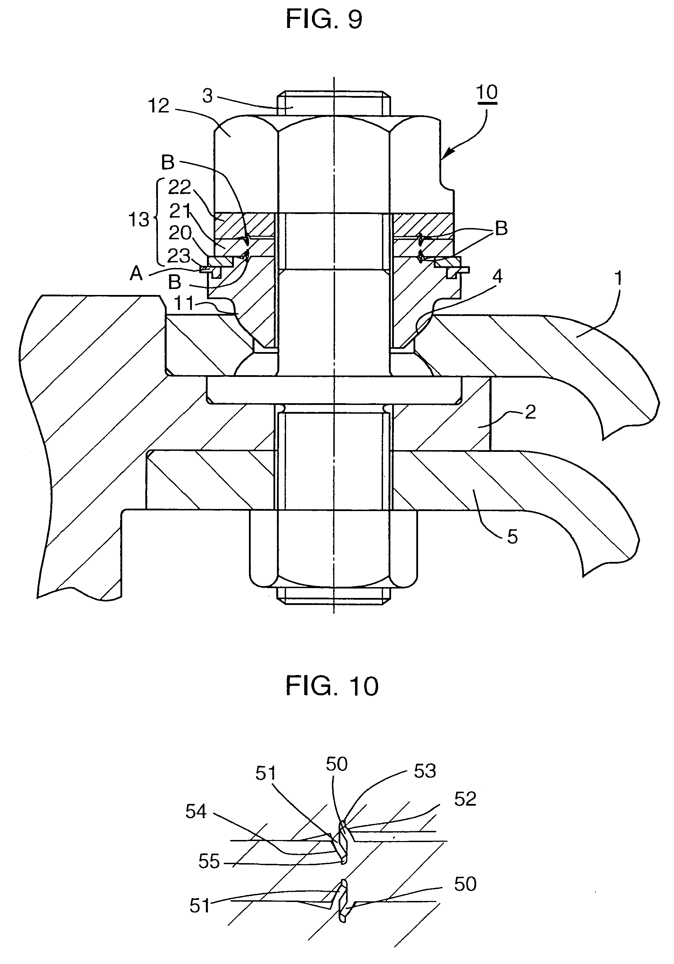

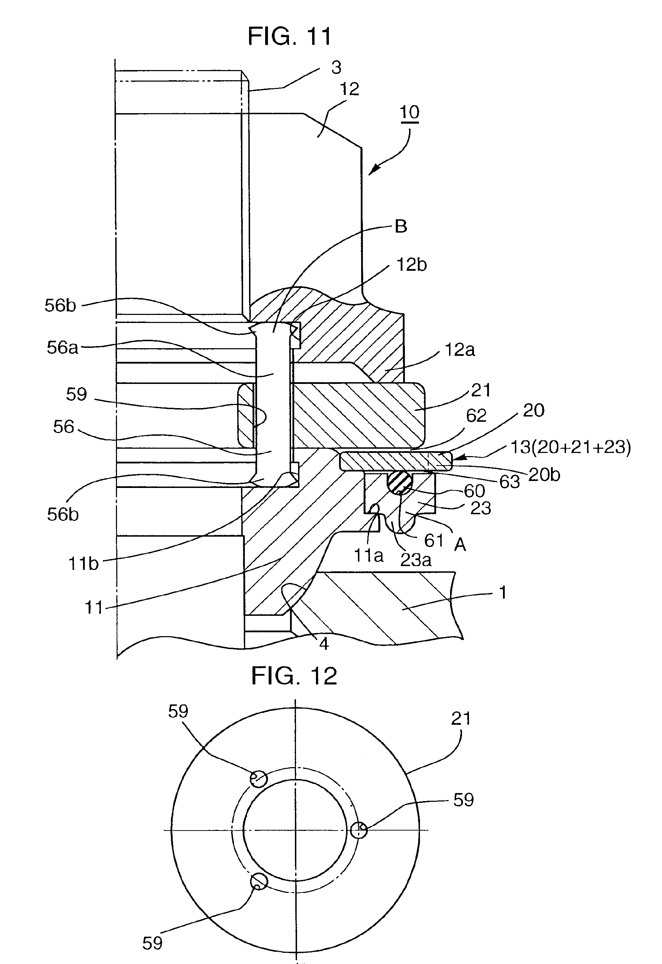

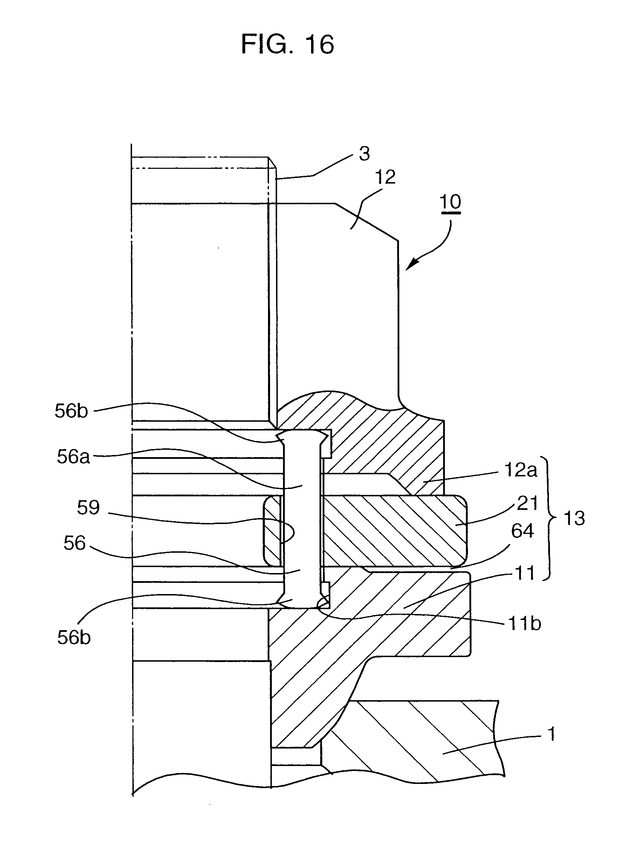

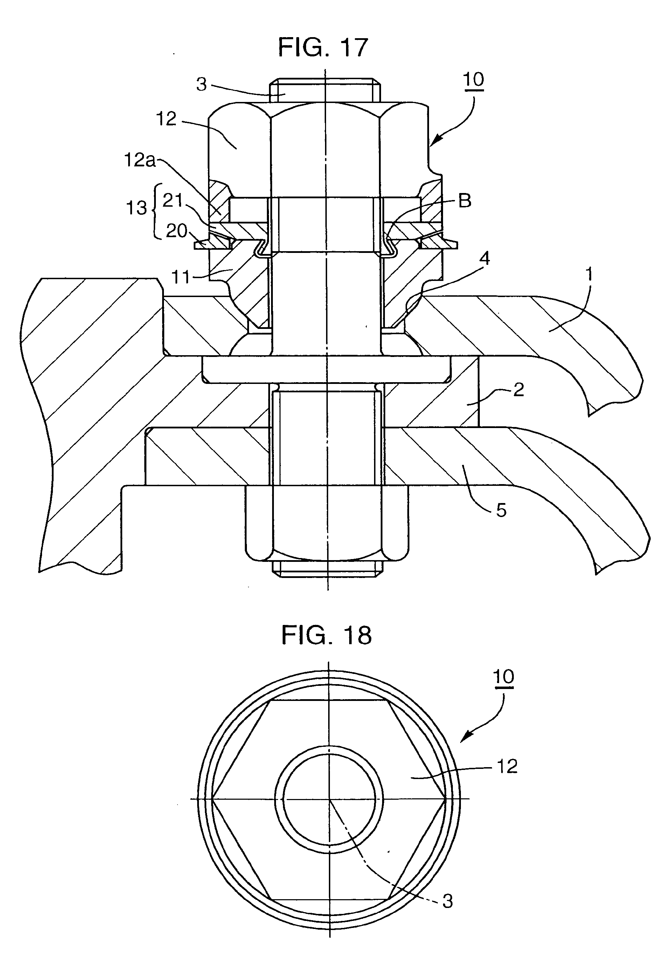

FIG. 1 illustrates an assembly according to Embodiment 1 of the present invention. FIG. 2 illustrates an assembly according to Embodiment 2 of the present invention. FIG. 3 illustrates an assembly according to Embodiment 3 of the present invention. FIGS. 4 and 5 illustrate an assembly according to Embodiment 4 of the present invention. FIGS. 6 and 7 illustrate an assembly according to Embodiment 5 of the present invention. FIG. 8 illustrates an assembly according to Embodiment 6 of the present invention. FIGS. 9 and 10 illustrate an assembly according to Embodiment 7 of the present invention. FIGS. 11 - 15 illustrate an assembly according to Embodiment 8 of the present invention. FIG. 16 illustrates an assembly according to Embodiment 9 of the present invention. FIGS. 17 and 18 are applicable to any embodiment of the present invention.

Portions of structures common to all of the embodiments of the present invention are denoted with the same reference numerals throughout all of the embodiments of the present invention.

First, portions of structures common to all of the embodiments (Embodiments 1 - 9) of the present invention and functions and technical advantages thereof will be explained with reference to FIGS. 1, 17 and 18. The embodiments shown illustrate that the axial force control nut assembly 10 is used, replacing the conventional hub nut 9 (see FIGS. 19 and 20) threaded to the hub nut 3 for fixing the wheel 1 to the hub 2 in a vehicle such as a truck and a bus. However, objects to which the axial force control nut assembly 10 is used are not limited to the hub nut for fixing the wheel to the hub of the vehicle. The wheel 1 is a disk wheel and is coupled to the hub 2 together with a brake drum 5.

The axial force control nut assembly 10 includes a seat member 11, a fastening nut 12 rotatable relative to the seat member 11, and a ring assembly 13 disposed between the seat member 11 and the fastening nut 12.

Several functions and technical advantages are common to all of the embodiments (Embodiments 1 - 9) of the present invention. Since the axial force control nut assembly 10 includes the seat member 11 and the fastening nut 12, and the fastening nut 12 is rotatable relative to the seat member 11, an axial force can be generated in the hub bolt 3 maintaining the seat member 11 unrotatable relative to a member 1 to be fastened (for example, a wheel, but not limited to the wheel). As a result, the conventional control by a torque can be replaced with a control by an axial force of the hub bolt 3, so that fastening control accuracy is not disturbed by a friction between the seat member 11 and the member 1 to be fastened. Further, since no friction is caused between the seat member 11 and the member 1 to be fastened, no surface roughing and no abrasion are caused in a nut seat surface 4 of the member 1 to be fastened, and cracking from the nut seat surface 4 is not reduced.

Next, portions of structures common to Embodiments 1 - 8 of the present invention and functions and technical advantages thereof will be explained.

The ring assembly 13 includes a plurality of rings. At least one of the plurality of rings is a first axial force control ring 20. The first axial force control ring 20 is free in rotation before the bolt axial force reaches the proper axial force and stops rotation (is restricted in rotation) on or after the bolt axial force reaches the proper axial force.

The seat member 11 is seated on the nut seat surface 4 around a bolt hole of the member 1 to be fastened (in the embodiment shown, a disk wheel 1) and is a member which is not rotated relative to the nut seat surface 4. Accordingly, the seat member 11 does not rotationally slide relative to the nut seat surface 4 of the member 1, so that the nut seat surface 4 of the member I is not roughened. The seat member 11 is a ring-like member, a radially inner surface of which is not threaded, and is not threaded to the hub bolt 3.

The fastening nut 12 has a female thread in a radially inner surface thereof and is threaded with the hub bolt 3. The fastening nut 12 has a hexagonal configuration, and is rotated by a wrench thereby generating a bolt axial force in the hub bolt 3.

The ring assembly 13 includes a plurality of rings (rings 20, 21 and 22 in the embodiment of FIG. 1). Preferably, the rings 20, 21 and 22 are made from metal.

In addition to the first axial force control ring 20, which can not rotate when the bolt axial force is equal to or greater than the proper axial force, the plurality of rings of the ring assembly 13 includes an elastic deformation ring 21 which is a deformable ring which undergoes elastic and/or plastic deformation(hereinafter called elastic deformation) when deformed. The elastic deformation ring 21 is located adjacent the first axial force control ring 20. When the elastic deformation ring 21 receives an axial force from the fastening nut 12, the elastic deformation ring 21 is elastically deformed in the axial direction by an amount of the gap (a first gap) between the first axial force control ring 20 and the elastic deformation ring 21 to contact the first axial force control ring 20 thereby restricting the first axial force control ring 20 in the rotational direction. The elastic deformation ring 21 is a ring which does not rotate much when the fastening nut 12 is rotated to be fastened.

In addition to the first axial force control ring 20 and the elastic deformation ring 21, the plurality of rings of the ring assembly 13 may include an axial force transmitting ring 22 which transmits the axial force from the fastening nut 12 to the elastic deformation ring 21 when the fastening nut 12 is rotated to be fastened. The axial force transmitting ring 22 does not rotate freely (but, may be rotated), when the fastening nut 12 is rotated to be fastened. When the fastening nut 12 is rotated to be fastened, only the fastening nut 12 rotates at the contact surface between the fastening nut 12 and the axial force transmitting member 22. This structure may be replaced by a structure shown in FIG. 17, where without providing the axial force control ring 22, a protrusion 12a protruding toward the ring assembly is formed in the fastening nut 12 so that the axial force from the fastening nut 12 is transmitted to the elastic deformation ring 21 via the protrusion 12a. In the case, when the fastening nut 12 is rotated to be fastened, the fastening nut 12 rotates at the contact surface between the protrusion 12a and the member which the protrusion 12a contacts.

The ring assembly 13 may optionally include an excessive axial force detecting structure A for detecting that the bolt axial force reaches an excessive axial force (for example, 16 ton in the case where a bolt diameter is 24 mm. In contrast, a bolt breakage load is, for example, 25 ton) greater than the proper axial force (for example, 12 ton in the case where a bolt diameter is 24 mm).

The axial force control nut assembly 10 may include a connecting structure B which combines at least two members among the plurality of rings 20, 21 and 22 of the ring assembly 13, the seat member 11 and the fastening nut 12 (which may be included or may not be included) so that the at least two members are not separated from each other (not disassembled to each other). The connecting structure B need not be provided.

Next, functions and technical advantages common to Embodiments 1 - 8 of the present invention will be described.

First, since the bolt axial force when the first axial force control ring 20 stops its rotation is set to be the proper bolt axial force (a value in the range of the proper bolt axial force), when imposing a torque to the fastening nut 12 thereby increasing the axial force of the bolt 3, one need only determine whether or not the first axial force control ring 20 is rotatable (by trying to rotate the ring 20 by hand) and to stop fastening the fastening nut 12 when it is found that the axial force control ring 20 becomes unrotatable. The confirmation as to whether or not the first axial force control ring 20 is rotatable is easier and higher in accuracy than the measurement by examination of the bulged amount of the rubber member.

Further, in the case where the ring assembly 13 includes the excessive axial force detecting structure A for detecting that the bolt force reaches the excessive axial force which is larger than the proper axial force, by rotating the fastening nut by a small rotational amount in a direction reverse to the fastening rotational direction when it is detected that the bolt axial force reaches the excessive axial force, an excessive axial force can be prevented from being loaded on the bolt. As a result, the bolt axial force can be set to a value greater than the proper bolt axial force (the axial force when rotation of the first axial force control ring 20 is restricted) and smaller than the excessive bolt axial force (but a value within a proper bolt axial force range).

In the case where the axial force control nut assembly further includes the connecting structure B which combine at least two members among the plurality of rings 20, 21 and 22 of the ring assembly 13, the seat member 11 and the fastening nut 12 so that the at least two members are not separated from each other, parts will not be left out and erroneous mounting of parts at a nut fastening stage can be prevented.

In the case where the fastening nut 12 includes the protrusion 12a protruding toward the ring assembly 13, the number of parts can be decreased as compared with a case where another ring (the axial force transmitting ring) is required for the fastening nut 12 to push the ring assembly 13.

Next, structures and functions and technical advantages unique to each embodiment of the present invention will be explained.

### [Embodiment 1]----FIGS. 1 and 18

In Embodiment 1 of the present invention, as illustrated in FIGS. 1 and 18, the ring assembly 13 of the axial force control nut assembly 10 includes the first axial force control ring 20, the elastic deformation ring 21 and the axial force transmitting ring 22 in that order in the direction from the seat member 11 toward the fastening nut 12. The first axial force control ring 20 is disposed between a stepped portion (a stepped recess portion) 11a of a radially outer portion of the seat member 11 and a tapered portion 21 c of a radially outer portion of the elastic deformation ring 21 so as to be freely rotatable before the proper axial force is loaded on the bolt 3. The axial force transmitting ring 22 and the elastic deformation ring 21 contact each other at the radially outer portions of the two rings, and there is a gap between the radially inner portions of the two rings.

The ring assembly 13 does not include the excessive axial force detecting structure A.

The ring assembly 13 has the connecting structure B.

In Embodiment 1 of the present invention, the connecting structure B includes two adjacent members among the plurality of rings 21 and 22 of the ring assembly 13, the seat member I 1 and the fastening nut 12 (the fastening nut 12 may be included or may not be included). The connecting structure B includes an axially extending portion 21a, 21b formed in the radially inner portion of one member 21 of the adjacent two members and axially extending inside the radially inner portion of the other of the adjacent two members. In Embodiment 1, in the radially inner portion of the elastic deformation ring 21, the axially extending portion 21a extending on the side of the seat member 11 and the axially extending portion 21b extending on the side of the axial force transmitting member 22 are formed.

Each axially extending portion 21 a, 21 b is deformed radially outwardly so as to axially engage an edge of an outwardly concave portion formed in the radially inner portion of the other member 11, 22 of the adjacent members.

With respect to functions and technical advantages of Embodiment 1 of the present invention, an axial force from the fastening nut 12 is transmitted to the radially outer portion of the elastic deformation ring 21 via the axial force transmitting ring 22 thereby elastically deforming the outer portion of the elastic deformation ring 21 toward the first axial force control ring 20. When the elastic deformation ring 21 contacts the first axial force control ring 20, rotation of the first axial force control ring 20 is restricted. Since restriction of rotation of the first axial force control ring 20 means that the bolt axial force reaches the proper bolt axial force, the acknowledgement is easy.

The connecting structure B includes the axially extending portion 21a, 21b which is formed in the radially inner portion of one 21 of the adjacent members among the plurality of rings 21, 22 of the ring assembly 13, the seat member 11 and the fastening nut 12 (the fastening nut 12 may be included or may not be included), and the axially extending portion 21a, 21b axially extends to the position radially inside the radially inner portion of the other 11, 22 of the adjacent members. Therefore, the plurality of rings 20, 21 and 22 and the seat member 11 and the fastening nut 12 (the fastening nut 12 may not be included) can be connected so that the plurality of rings 20, 21 and 22 and the seat member 11 and the fastening nut 12 are not disassembled from each other, by deforming the axially extending portion 21a, 21b radially outwardly so that the axially extending portion 21 a, 21 b axially engages with the radially inner portion of the other 11, 22 of the adjacent members.

### [Embodiment 2]----FIGS. 2 and 18

In Embodiment 2 of the present invention, a groove 20a, acting as the excessive axial force detecting structure A, is added to Embodiment 1 of the present invention.

In Embodiment 2 of the present invention, as illustrated in FIGS. 1 and 18, the ring assembly 13 of the axial force control nut assembly 10 includes the first axial force control ring 20, the elastic deformation ring 21 and the axial force transmitting ring 22 in that order in the direction from the seat member 11 toward the fastening nut 12. The first axial force control ring 20 is disposed between a stepped portion (a stepped recess portion) 11a of a radially outer portion of the seat member 11 and a tapered portion 21 c of a radially outer portion of the elastic deformation ring 21 so as to be freely rotatable before the proper axial force is loaded on the bolt 3. The axial force transmitting ring 22 and the elastic deformation ring 21 contact each other at the radially outer portions of the two rings, and there is a gap between the radially inner portions of the two rings.

The ring assembly 13 includes the excessive axial force detecting structure A.

The excessive axial force detecting structure A of the ring assembly 13 includes the groove 20a formed in the axial force control ring 20. When the bolt axial force acting on the axial force control ring 20 reaches the excessive bolt axial force, the axial force control ring 20 is broken at the groove 20a, so that a portion of the axial force control ring radially outside the groove 20a is rotatable relative to a portion of the axial force control ring radially inside the groove 20a.

The ring assembly 13 has the connecting structure B.

The connecting structure B of Embodiment 2 of the present invention includes two adjacent members among the plurality of rings 21 and 22 of the ring assembly 13, the seat member 11 and the fastening nut 12 (the fastening nut 12 may be included or may not be included). The connecting structure B includes an axially extending portion 21 a, 21 b formed in the radially inner portion of one member 21 of the adjacent two members and axially extending inside the radially inner portion of the other of the adjacent two members. In the Embodiment, in the radially inner portion of the elastic deformation ring 21, the axially extending portion 21a extending on the side of the seat member 11 and the axially extending portion 21 b extending on the side of the axial force transmitting member 22 are formed.

Each axially extending portion 21a, 21b is deformed radially outwardly so as to axially engage an edge of an outwardly concave portion formed in the radially inner portion of the other member 11, 22 of the adjacent members.

With respect to functions and technical advantages of Embodiment 2 of the present invention, an axial force from the fastening nut 12 is transmitted to the radially outer portion of the elastic deformation ring 21 via the axial force transmitting ring 22 thereby elastically deforming the outer portion of the elastic deformation ring 21 toward the first axial force control ring 20. When the elastic deformation ring 21 contacts the first axial force control ring 20, rotation of the first axial force control ring 20 is restricted. Since restriction of rotation of the first axial force control ring 20 means that the bolt axial force reaches the proper bolt axial force, the acknowledgement is easy.

Further, since the excessive axial force detecting structure A includes the groove 20a formed in the first axial force control ring 20, the first axial force control ring 20 will be broken at the groove 20a when the bolt axial force reaches the excessive axial force. As a result, the portion of the first axial force control ring radially outside the groove 20a becomes rotatable relative to the portion of the first axial force control ring radially inside the groove 20a, whereby it can be acknowledged that the bolt axial force reaches the excessive axial force. When rotating and fastening the fastening nut 12, after rotation of the first axial force control ring 20 is restricted and the bolt force reaches the proper axial force, if the rotation of the fastening nut 12 is stopped before the first axial force control ring 20 is broken at the groove 20a and the radially outer portion of the first axial force control ring becomes rotatable again, then the excessive bolt axial force has not been reached. If the first axial force control nut 20 is broken at the groove 20a during the increase in rotation, the nut is rotated a little in a reverse direction so that the bolt axial force becomes lower than the excessive bolt axial force and within the proper bolt axial force range.

The connecting structure B includes the axially extending portion 21a, 21b which is formed in the radially inner portion of one 21 of the adjacent members among the plurality of rings 21, 22 of the ring assembly 13, the seat member 11 and the fastening nut 12 (the fastening nut 12 may be included or may not be included), and the axially extending portion 21 a, 21 b axially extends to the position radially inside the radially inner portion of the other 11, 22 of the adjacent members. Therefore, the plurality of rings 20, 21 and 22 and the seat member 11 and the fastening nut 12 (the fastening nut 12 may not be included) can be connected so that the plurality of rings 20, 21 and 22 and the seat member 11 and the fastening nut 12 are not disassembled from each other, by deforming the axially extending portion 21a, 21b radially outwardly so that the axially extending portion 21a, 21b axially engages with the radially inner portion of the other 11, 22 of the adjacent members.

### [Embodiment 3]----FIGS. 3 and 18

In Embodiment 3 of the present invention, a second axial force control ring 23 acting as the excessive axial force detecting structure A, is added to Embodiment 1 of the present invention.

In Embodiment 3 of the present invention, as illustrated in FIGS. 3 and 18, the ring assembly 13 of the axial force control nut assembly 10 includes the first axial force control ring 20, the elastic deformation ring 21 and the axial force transmitting ring 22 in that order in the direction from the seat member 11 toward the fastening nut 12. The axial force transmitting ring 22 and the elastic deformation ring 21 contact each other at the radially outer portions of the two rings, and there is a gap between the radially inner portions of the two rings.

The ring assembly 13 of the axial force control nut assembly 10 further includes a second axial force control ring 23 (the second axial force control ring 23 does not contact the first axial force control ring 20) which can freely rotate before the bolt axial force reaches the excessive axial force larger than the proper axial force and is restricted in rotation on or after the bolt force reaches the excessive axial force, and a second axial force transmitting ring 24 which transmits the axial force from the fastening nut 12 to the axial force transmitting ring 22. The second axial force transmitting ring 24 has a radially outer portion which is elastically deformed when the axial force from the fastening nut 12 acts on the radially outer portion and is pressed against the second axial force control ring 23 when the axial force reaches the excessive axial force, thereby restricting rotation of the second axial force control ring 23. It can be acknowledged whether or not the bolt axial force is excessive by detecting whether or not rotation of the second axial force control ring 23 is restricted.

The second axial force control ring 23 is disposed at a space between a stepped recess 22b formed at a radially outer portion of the axial force transmitting ring 22 and a tapered portion 24a formed at a radially outer portion of the second axial force transmittine ring 24 so as to be rotatable until the excessive bolt axial force is imposed on the bolt 3.

The excessive axial force detecting structure A of the ring assembly 13 includes the second axial force control ring 23. When the bolt axial force reaches the excessive bolt axial force, rotation of the second axial force control ring 23 is restricted.

The ring assembly 13 includes a connecting structure B which prevents the rings 20, 21, 22 and 24 of the ring assembly 13, the seat member 11 and the fastening nut 12 from being disassembled from each other.

The connecting structure B of Embodiment 3 of the present invention includes an axially extending portion 21a formed at a radially inner portion of the elastic deformation ring 21 and axially extending toward the seat member 11, an axially extending portion 21 b formed at the radially inner portion of the elastic deformation ring 21 and axially extending toward the axial force transmitting ring 22, and an axially extending portion 22a formed at a radially inner portion of the axial force transmitting ring 22 and axially extending toward the second axial force transmitting ring 24.

Each axially extending portion 21a, 21b and 22a is deformed radially outwardly so as to axially engage with a radially inner portion (periphery of radially outwardly concave recess formed in the radially inner portion) of the adjacent member 11, 22 or 24.

With respect to functions and technical advantages of Embodiment 3 of the present invention, the axial force from the fastening nut 12 is transmitted to the radially outer portion of the elastic deformation ring 21 via the axial force transmitting members 24 and 22 to thereby deform the radially outer portion of the elastic deformation ring 21 toward the first axial force control ring 20. When the elastic deformation ring 21 contacts the first axial force control ring 20, rotation of the first axial force control ring 20 is restricted. Since the bolt axial force has reached the proper bolt axial force when rotation of the first axial force control ring 20 is restricted, this determination is easy.

Further, since the excessive axial force detecting structure A includes the second axial force control ring 23, when the bolt axial force achieves the excessive axial force, the outer portion of the second axial force transmitting ring 24 is pushed by the fastening nut 12 and is elastically deformed toward the second axial force control ring 23. When the radiallly outer portion of the second axial force transmitting ring 24 contacts the second axial force control ring 23, rotation of the second axial force control ring 23 is restricted whereby it can be detected that the bolt axial force has become excessive. When rotating and fastening the fastening nut 12 and the proper axial force acts on the bolt, rotation of the first axial force control ring 20 is restricted. The fastening nut can then be further rotated, as long as the additional rotation is stopped before rotation of the second axial force control nut 23 is restricted. If the rotation of the second axial force control ring 23 is restricted during the additional rotation of the fastening nut 12, the fastening nut 12 can be reversely rotated so that the bolt axial force falls within the proper range.

Further, since the connecting structure B includes the axially extending portions 21a, 21b which are formed in the radially inner portion of the elastic deformation ring 21 and axially extend to a position inside the adjacent member 11, 22, and the axially extending portion 22a which is formed in the axial force transmitting ring 22 and axially extends to a position inside the adjacent member 24, the plurality of rings 20, 21, 22, 23 and 24 of the ring assembly 13, and the seat member 11 can be connected so that the plurality of rings 20, 21, 22, 23 and 24 and the seat member 11 are not disassembled from each other. This is accomplished by deforming the axially extending portions 2 1 a, 21b, 22a radially outwardly so that the axially extending portions 21a, 21b, 22a axially engage with the periphery of the concave portion formed in the radially inner portions of the adjacent members 11, 22, 24.

### [Embodiment 4]----FIGS. 4, 5 and 18

In Embodiment 4 of the present invention, the connecting structure B of Embodiments 1 - 3 of the present invention is provided.

In Embodiment 4 of the present invention, as illustrated in FIGS. 4, 5 and 18, the ring assembly 13 of the axial force control nut assembly 10 includes the first axial force control ring 20, the elastic deformation ring 21 and the axial force transmitting ring 22 in that order in the direction from the seat member 11 toward the fastening nut 12.

The first axial force control ring 20 is disposed at a space between a stepped portion (a stepped recess portion) 11a of a radially outer portion of the seat member 11 and a tapered portion 21c of a radially outer portion of the elastic deformation ring 21 so as to be freely rotatable before the proper axial force is loaded on the bolt 3. The axial force transmitting ring 22 and the elastic deformation ring 21 contact each other at the radially outer portions of the two rings, and there is a gap between the radially inner portions of the two rings.

The ring assembly 13 includes a connecting structure B.

The connecting structure B of Embodiment 4 of the present invention includes (a) a concave portion 30 formed at a surface of one of adjacent members 11, 22 among the plurality of rings 21 and 22 of the ring assembly 13, the seat member 11 and the fastening nut 12 (the fastening nut 12 may be included or may not be included) and including a narrowed inlet, and (b) a convex portion 31 formed at a surface (a surface extending in a direction perpendicular to the bolt axis) of the other of the adjacent members 21. The convex portion 31 has a tip end greater in width than the inlet of the concave portion 30. (However, a root of the convex portion 31 is narrower in width than the inlet of the concave portion 30.) The convex portion 31 has a gap between the tip end and an inside surface of the concave portion 30. The convex portion 31 is forcibly inserted into the concave portion passing the narrowed inlet of the concave portion 30 by applying an axial load. The convex portion 31 and the concave portion 30 extend in a circumferential direction about a bolt axis, and the convex portion 31 protrudes into the concave portion 30.

With respect to functions and technical advantages of Embodiment 4 of the present invention, since the connecting structure B includes (a) the concave portion 30 formed at the surface of one of adjacent members 11, 22 and having the narrowed inlet, and (b) the convex portion 31 formed the surface of the other of the adjacent members 21 and having the tip end greater in width than the inlet of the concave portion 30 and the gap between the tip end and the inside surface of the concave portion 30, the ring assembly 13, the seat member 11 and the fastening nut 12 (the fastening nut 12 may be included or may not be included) can be combined so that the parts can not be disassembled from each other.

### [Embodiment 5]----FIGS. 6, 7 and 18

In Embodiment 5 of the present invention, the excessive axial force detecting structure A of Embodiment 3 of the present invention and the connecting structure B of Embodiment 4 of the present invention are present.

In Embodiment 5 of the present invention, as illustrated in FIGS. 6, 7 and 18, the ring assembly 13 of the axial force control nut assembly 10 includes the second axial force control ring (the excessive axial force detecting ring) 23, the first axial force control ring (the proper axial force detecting ring) 20, the elastic deformation ring 21 and the axial force transmitting ring 22 in that order in the direction from the seat member 11 toward the fastening nut 12.

In Embodiment 5, there is no second axial force transmitting ring as compared with Embodiment 3, so that the number of parts is decreased by one.

The ring assembly 13 includes the excessive axial force detecting structure A. The excessive axial force detecting structure A includes the second axial force control ring 23. The second axial force control ring 23 is located adjacent the first axial force control ring 20.

The first axial force control ring 20 and the second axial force control ring 23 are disposed at a space between a stepped recess portion 11a of a radially outer portion of the seat member 11 and a radially outer portion of the elastic deformation ring 21 so as to be freely rotatable before the proper axial force is loaded on the bolt 3. When the bolt axial force acts on the elastic deformation ring 21 and the elastic deformation ring 21 is elastically deformed toward the first axial force control ring 20, and when the bolt axial force reaches the proper bolt axial force, the elastic deformation ring 21 contacts the first axial force control ring 20 whereby rotation of the first axial force control ring 20 is restricted. When the bolt axial force is further increased, the first axial force control ring 20 is elastically deformed toward the second axial force control ring 23. When the bolt axial force reaches the predetermined excessive bolt axial force, the first axial force control ring 20 contacts the second axial force control ring 23 whereby rotation of the second axial force control ring 23 is restricted. It can be detected that the bolt axial force becomes proper by detecting whether or not rotation of the first axial force control ring 20 is restricted, and it can be detected that the bolt axial force becomes excessive by detecting whether or not rotation of the second axial force control ring 23 is restricted.

The ring assembly 13 includes a connecting structure B.

The connecting structure B includes (a) a radially inner protrusion 40, a radially outer protrusion 41 and a protrusion receiving concave portion 42 formed at a surface (a surface extending perpendicular to the bolt axis) of one of adjacent members 11, 22 among the plurality of rings 21 and 22 of the ring assembly 13, the seat member 11 and the fastening nut 12 (the fastening nut 12 may be included or may not be included), and (b) a radially inner concave portion 45, a radially outer concave portion 47 and a central protrusion 43 formed at a surface (a surface extending perpendicular to the bolt axis) of the other of the adjacent members 21.

The radially inner protrusion 40 and the radially outer protrusion 41 extend toward the other of the adjacent members 21.

The radially inner concave portion 45 has a radially inner tapered surface 44. The radially outer concave portion 47 has a radially outer tapered surface 46. The central protrusion 43 is formed between the radially inner concave portion 45 and the radially outer concave portion 47 and extends axially toward the one of the adjacent members 11, 22. The central protrusion 43 has a tip larger in width than its root. (The bulged tip of the central protrusion 43 can be formed by machining or forming by loading an axial load onto the protrusion.)

The radially inner tapered surface 44 plastically deforms the radially inner protrusion 40 radially outwardly when the radially inner protrusion 40 is pushed against the radially inner tapered surface 44 in an axial direction (a direction parallel to the bolt axial direction). The radially outer tapered surface 46 plastically deforms the radially outer protrusion 41 radially inwardly when the radially outer protrusion 41 is pushed against the radially outer tapered surface 46. A radial space between a tip of the radially inner protrusion 40 and a tip of the radially outer protrusion 41 after the radially inner protrusion 40 and the radially outer protrusion 41 are deformed is smaller than a radial width of a tip of the central protrusion 43. Due to this structure, inserting the central protrusion 43 into the protrusion receiving concave portion 42 is easy without needing pressing. After pressing the radially inner protrusion 40 and the radially outer protrusion 41 against the radially inner tapered surface 44 and the radially outer tapered surface 46, respectively, thereby deforming the radially inner protrusion 40 and the radially outer protrusion 41, the central protrusion 43 is prevented from slipping out from the protrusion receiving concave portion 42, so that the parts can not be disassembled from each other.

With respect to functions and technical advantages of Embodiment 5 of the present invention, since the connecting structure B includes (a) the radially inner protrusion 40 and the radially outer protrusion 41 formed at the surface of one of adjacent members 11, 22, and (b) the radially inner concave portion 45 having the radially inner tapered surface 44, the radially outer concave portion 47 having the radially outer tapered surface 46, and the central portion 43, respectively, formed at the surface of the other of the adjacent members 21, the radially inner tapered surface 44 deforms the radially inner protrusion 40 radially outwardly when the radially inner protrusion 40 is pushed against the radially inner tapered surface 44, and the radially outer tapered surface 46 deforms the radially outer protrusion 41 radially inwardly when the radially outer protrusion 41 is pushed against the radially outer tapered surface 46. By making the radial space between the tip of the radially inner protrusion 40 and the tip of the radially outer protrusion 41 smaller than the radial width of the tip of the central protrusion 43, parts of the axial force control nut assembly can be combined so that the parts can not be disassembled from each other.

### [Embodiment 6]----FIGS. 8 and 18

In Embodiment 6 of the present invention, a protruding portion 12a shown in FIG. 17 is additionally formed on the fastening nut 12 of Embodiment 5 of the present invention, and a connecting structure B is provided not only between the ring assembly 13 and the seat member 11 but also between the ring assembly 13 and the fastening nut 12.

More particularly, in Embodiment 6 of the present invention, as illustrated in FIGS. 8 and 18, the fastening nut 12 includes the protruding portion 12a protruding toward the ring assembly 13. No axial force transmitting ring 22 is provided between the fastening nut 12 and the elastic deformation ring 21. As a result, the number of parts of the ring assembly 13 is decreased as compared with Embodiment 5 of the present invention.

Further, the connecting structure B is provided at the contact portion between the ring assembly 13 and the seat member 11 thereby combining the ring assembly 13 and the seat member 11 so that the ring assembly 13 and the seat member 11 can not be disassembled. Another connecting structure B is provided at the contact portion between the ring assembly 13 and the fastening nut 12 thereby combining the ring assembly 13 and the fastening nut 12 so that the ring assembly 13 and the fastening nut 12 can not be disassembled. The other structures of Embodiment 6 are similar to those of Embodiment 5 of the present invention.

With respect to the functions and technical advantages of Embodiment 6 of the present invention, since the fastening nut 12 includes the protruding portion 12a protruding toward the ring assembly 13, the number of parts can be decreased as compared with the case where the axial force transmitting ring 22 is provided for the fastening nut 12 to push the ring assembly.

Further, since the connecting structures B not only combine the ring assembly 13 and the seat member 11 so that the ring assembly 13 and the seat member 11 can not be disassembled and but also combine the ring assembly 13 and the fastening nut 12 so that the ring assembly 13 and the fastening nut 12 can not be disassembled, all parts of the axial force control nut assembly 10 including the ring assembly 13, the seat member 11 and the fastening nut 12 can be assembled in the axial direction.

The other functions and technical advantages of Embodiment 6 are similar to those of Embodiment 5 of the present invention.

### [Embodiment 7]----FIGS. 9, 10 and 18

In Embodiment 7 of the present invention, a connecting structure B is more simplified than the connecting structure of the axial force control assembly of Embodiment 5 of the present invention.

More particularly, in Embodiment 7 of the present invention, as illustrated in FIGS. 9, 10 and 18, the connecting structure B includes (a) a radially outer protrusion 51 and a radially inner concave 53 formed at a surface of one of adjacent members among the plurality of rings 20, 21, 22 and 23 of the ring assembly 13, the seat member 11 and the fastening nut 12, and (b) a radially inner protrusion 50 and a radially outer concave 55 formed at a surface of the other of the adjacent members. The radially outer protrusion 51 extends toward the other of the adjacent members. The radially inner concave 53 is formed radially inside the radially outer protrusion 51 and has a radially inner tapered surface 52. The radially inner protrusion 50 extends toward the one of the adjacent members. The radially outner concave 55 is formed radially outside the radially inner protrusion 50 and has a radially outer tapered surface 54.

The radially inner tapered surface 52 deforms the radially inner protrusion 50 radially outwardly when the radially inner protrusion 50 is pushed against the radially inner tapered surface 52. The radially outer tapered surface 54 deforms the radially outer protrusion 51 radially inwardly when the radially outer protrusion 51 is pushed against the radially outer tapered surface 54. As a result, a tip of the radially inner protrusion 50 and a tip of the radially outer protrusion 51 after the radially inner protrusion 50 and the radially outer protrusion 51 are deformed interfere with each other in the axial direction so that the members 11, 12, 20, 21, 22 and 23 can not be disassembled.

Further, since the central protrusion 43 having the bulged tip is not required to be provided, the connecting structure B of Embodiment 6 of the present invention is simplified than that of Embodiment 5 of the present invention.

### [Embodiment 8]----FIGS. 11 - 15 and 18

In Embodiment 8 of the present invention, a structure of the ring assembly 13, an excessive axial force detecting structure A and a connecting structure B are provided.

More particularly, in Embodiment 8 of the present invention, as illustrated in FIGS. 11 - 15 and 18, the ring assembly 13 of the axial force control nut assembly 10 includes the second axial force control ring (the excessive axial force detecting ring) 23, the first axial force control ring (the proper axial force detecting ring) 20 and the elastic deformation ring 21 in that order in the direction from the seat member 11 toward the fastening nut 12. The fastening nut 12 includes the protruding portion 12a protruding toward the elastic deformation ring 21 at a radially outer portion of the fastening nut. The protruding portion 12a of the fastening nut 12 pushes directly the elastic deformation ring 21 thereby deforming the elastic deformation ring 21 so that a radially outer portion of the elastic deformation ring 21 is located obliquely downward of a radially inner portion of the elastic deformation ring 21. Due to the protruding portion 12a, it is not necessary to provide an axial force transmitting ring, whereby the number of parts is decreased.

The ring assembly 13 includes the excessive axial force detecting structure A. The excessive axial force detecting structure A includes the second axial force control ring 23 which is freely rotatable before the bolt axial force reaches the excessive axial force larger than the proper axial force, and which is restricted in rotation when the bolt axial force is equal to or larger than the excessive axial force. The second axial force control ring 23 is located adjacent the first axial force control ring 20.

The first axial force control ring 20 and the second axial force control ring 23 are located at a space formed between a steppedly recess portion 11a of a radially outer portion of the seat member 11 and a radially outer portion of the elastic deformation ring 21 so as to be freely rotatable before the proper axial force is loaded on the bolt 3.

A first gap 62 exists between the elastic deformation ring 21 and the first axial force control ring 20. The first gap 62 becomes zero when the bolt axial force is equal to or greater than the proper axial force before the bolt is fastened. A second gap 63 exists between the first axial force control ring 20 and the second axial force control ring 23. The second gap 63 becomes zero when the bolt axial force is equal to or greater than the excessive axial force before the bolt is fastened.

When the bolt axial force is loaded on the elastic deformation ring 21 and the elastic deformation ring 21 is elastically deformed toward the first axial force control ring 20, the first gap 62 becomes zero when the bolt axis reaches the proper bolt axial force. As a result, the elastic deformation ring 21 contacts the first axial force control ring 20, and rotation of the first axial force control ring 20 is restricted. When the bolt axial force is further increased, the first axial force control ring 20 is elastically deformed toward the second axial force control ring 23. When the bolt axial force reaches the predetermined excess bolt axial force, the second gap 63 becomes zero. As a result, the first axial force control ring 20 contacts the second axial force control ring 23, and rotation of the scond axial force control ring 23 is restricted. Therefore, it can be detected whether or not the bolt axial force is proper, by detecting whether or not rotation of the first axial force control ring 20 is restricted. It can be detected whether or not the bolt axial force is excessive, by detecting whether or not rotation of the second axial force control ring 23 is restricted.

The first axial force control ring 20 has at least one convex portion 20b protruding radially outwardly at a radially outer portion of the ring 20, so that it is easy to rotate the first axial force control ring 20 by contacting the ring 20 at the convex portion 20b when rotating the ring 20 about an axis of the ring 20.

The second axial force control ring 23 includes a seal ring groove 61 formed in a surface of the second axial force control ring opposing the first axial force control ring 20 and extending in an entire circumference. An elastic seal ring 61 is fit in the seal ring groove 61. The seal ring 60 is pushed by the first axial force control ring 20 thereby sealing the second gap 63.

The seal ring groove 61 is formed by stamping the second axial force control ring 23. A portion of the second axial force control ring 23 opposite the seal ring groove 61 protrudes at the time of stamping, and a convex portion 23a is formed in the second axial force control ring 23. A tip end of the convex portion 23a is spaced from the member 1 to be fastened.

The connecting structure B includes a connecting bar 56. The connecting bar 56 extends between the fastening nut 12 and the seat member 11 which oppose each other via the ring assembly 13. The connecting bar 56 connects the fastening nut 12 and the seat member 11.

The fastening nut 12 has a nut circumferential groove 12b at a radially inner surface of the nut 12. The groove 12b extends in a circumferential direction of the nut over an entire circumference of the nut. The seat member 11 has a seat member circumferential groove 11b. The groove 11b extends in a circumferential direction of the seat member over an entire circumference of the seat member.

The connecting bar 56 is provided at a plurality of positions, for example, three positions, around the bolt. The connecting bar 56 includes a connecting bar rod portion 56a and a connecting bar end portion 56b at each of opposite ends of the connecting bar rod portion 56a. The connecting bar end portion 56b extends radially outwardly more than an outside diameter of the connecting bar rod portion 56a. One connecting bar end portion 56b at one end of the connecting bar 56 engages with a periphery of the nut circumferential groove 12b, and the other connecting bar end portion 56b at the other end of the connecting bar 56 engages with a periphery of the seat member circumferential groove 11b.

In the embodiment of FIGS. 11 - 13, the ring assembly 13 includes the elastic deformation ring 21 which has an axially penetrating hole 59 between the an inside diameter and an outside diameter of the elastic deformation ring 21. The connecting bar 56 penetrates the hole 59 of the elastic deformation ring 21.

A diameter of the hole 59 is larger than a diameter of the connecting bar rod portion 56a and is smaller than a diameter of the connecting bar end portions 56b of the connecting bar 56. The connecting bar 56 is caused to penetrate the hole 59 before the end portions 56b are expanded. After the end portions 56b are expanded, the end portions cannot pass through the hole 59, so that the ring assembly 13, the fastening nut and the seat member 11 can not be disassembled.

The connecting bar end portion 56b has a conical slit 57. The connecting bar end portion 56b is expanded radially outwardly in a direction apart from an axis of the conical slit by loading an axial compression load on the fastening nut 12 and the seat member 11 thereby imposing an axial force on the connecting bar 56. For rust prevention, the connecting bar 56 is made from corrosion preventive material, for example, copper, etc. Since copper is easy to be deformed, the end portion 56b can be easily expanded. It was confirmed by test that end portions 56b made from steel could be expanded by loading an axial force. One of the expanded connecting bar end portions 56b engages the periphery of the nut circumferential groove 12b and the other of the expanded connecting bar end portions 56b engages the periphery of the seat member circumferential groove 11b.

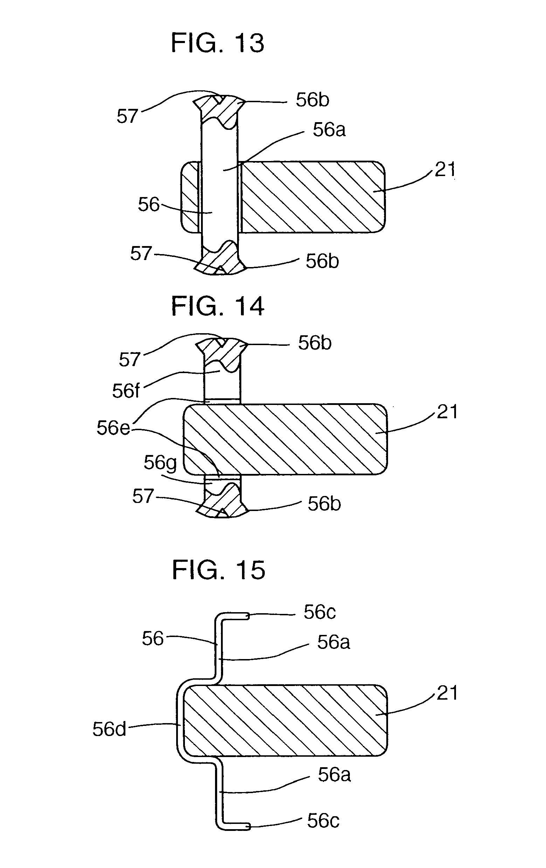

In the case where the elastic deformation ring 21 includes a hole 59, a stress concentration is generated in a portion of the ring around the hole 59 when the elastic deformation ring 21 is deformed. To remove the stress concentration, a structure shown in FIG. 14 (Alteration 1 of Embodiment 8) or a structure shown in FIG. 15 (Alteration 2 of Embodiment 8) can be used.

In the structure of FIG. 14, the ring assembly 13 includes the elastic deformation ring 21. The elastic deformation ring 21 has no hole penetrating the ring 21 in the axial direction of the ring 21, between the inside diameter and the outside diameter of the ring 21.

The connecting bar 56 is divided into a first connecting bar portion 56f and a second connecting bar portion 56g. The first connecting bar portion 56f is adhered to one surface of the elastic deformation ring 21 by a double coated adhesive tape 56e, and the second connecting bar portion 56g is adhered to the other surface of the elastic deformation ring 21 by another double coated adhesive tape 56e.

The connecting bar end portions 56b are expanded by loading an axial force on the end portions 56b and the rod portion 56a of the connecting bar 56, as discussed with regard to FIG. 13.

In the structure of FIG. 15, the ring assembly 13 includes the elastic deformation ring 21. The elastic deformation ring 21 has no hole penetrating the ring 21 in the axial direction of the ring 21, between the inside diameter and the outside diameter of the ring 21.

The connecting bar 56 is made by bending a plate and is coupled to the elastic deformation ring 21 by wrapping around the elastic deformation ring 21. The connecting bar 56 includes a first connecting bar portion 56a positioned on one side of the elastic deformation ring 21, a second connecting bar portion 56a positioned on the other side of the elastic deformation ring 21 and a connecting portion 56d connecting the first connecting bar portion 56a and the second connecting bar portion 56a. A connecting bar end portion 56c is formed by bending the first and second connecting bar portions 56a so that the first and second connecting bar end portions 56c can engage the circumferential grooves 12b and 11b.

With respect to the functions and technical advantages of Embodiment 8 of the present invention, since (a) the first gap 62 becomes zero when the bolt axial force is equal to or greater than the proper axial force, and (b) the second gap 63 becomes zero when the bolt axial force is equal to or greater than the excessive axial force, a state where rotation of the first axial force control ring 20 is restricted and rotation of the second axial force control ring 23 is not restricted corresponds to a range of a proper bolt axial force. Therefore, it can be easily confirmed whether or not the bolt 3 is in the range of the proper bolt axial force by detecting whether or not the first and second axial force control rings 20 and 23 are rotatable.

Further, since the second axial force control ring 23 includes the seal ring groove 61 formed in the surface of the second axial force control ring opposing the first axial force control ring 20 and extending around the entire circumference, and the elastic seal ring 61 is fit in the seal ring groove 61, water is prevented from entering the bolt thread portion through the second gap 63.

Further, since the connecting structure B includes the connecting bar 56 which extends between the fastening nut 12 and the seat member 11 and connects the fastening nut 12 and the seat member 11, the fastening nut 12, the seat member 11 and the ring assembly 13 can be connected to each other by the connecting bar 56 so that the members 11, 12 and 13 do not disengage from each other.

In the case where the elastic deformation ring 21 does not have a hole 59, when a load is imposed on the elastic deformation ring 21 and the elastic deformation ring 21 is elastically deformed, no stress concentration is generated around the hole 59, so that structural advantages are obtained.

### [Embodiment 9]----FIGS. 16 and 18

In Embodiment 9 of the present invention, the structure of the ring assembly 13 is simplified and the excessive axial force detecting structure A is removed in the axial force control assemblies of Embodiments 5 - 8 of the present invention.

More particularly, in Embodiment 9 of the present invention, as illustrated in FIGS. 16 and 18, the ring assembly 13 of the axial force control assembly 10 includes the elastic deformation ring 21 only. The first axial force control ring 20 and the second axial force control ring 23 are not provided so that the structure of the ring assembly 13 is simplified.

The ring assembly 13 includes the elastic deformation ring 21 and does not have the first axial force control ring 20 and the second axial force control ring 23. A configuration and an elasticity of the elastic deformation ring 21 are determined such that a gap 64 exists between a radially outer portion of the elastic deformation ring 21 and the seat member 11 before the bolt axial force reaches the proper axial force and the gap 64 existing between the radially outer portion of the elastic deformation ring 21 and the seat member 11 becomes zero when the bolt axial force is equal or greater than the proper axial force.

The fastening nut 12 includes a protruding portion 12a protruding toward the elastic deformation ring 21. The protruding portion 12a of the fastening nut 12 pushes the elastic deformation ring 21 thereby deforming the elastic deformation ring 21 such that a radially outer portion of the elastic deformation ring 21 is positioned obliquely downward relative to a radially inner portion of the elastic deformation ring 21. Due to provision of the protruding portion 12a, it is not necessary to provide an axial force transmitting ring, and as a result, the number of parts is decreased.

A connecting structure B having the same structure as the connecting structure B of Embodiment 8 is provided. More particularly, the connecting structure B includes the connecting bar 56 which extends between the fastening nut 12 and the seat member 11 opposing to each other via the ring assembly 13 and connects the fastening nut 12 and the seat member 11.

The fastening nut 12 has a nut circumferential groove 12b at a radially inner surface of the nut 12. The groove 12b extends in a circumferential direction of the nut over an entire circumference of the nut. The seat member 11 has a seat member circumferential groove 11b. The groove 11b extends in a circumferential direction of the seat member over an entire circumference of the seat member.

The connecting bar 56 is provided at a plurality of positions, for example, three positions, around the bolt. The connecting bar 56 includes a connecting bar rod portion 56a and a connecting bar end portion 56b at each of opposite ends of the connecting bar rod portion 56a. The connecting bar end portion 56b extends radially outwardly more than an outside diameter of the connecting bar rod portion 56a. The connecting bar end portion 56b has a conical slit 57. The connecting bar end portion 56b is expanded radially outwardly in a direction away from an axis of the conical slit by loading an axial compression load on the fastening nut 12 and the seat member 11 thereby imposing an axial force on the connecting bar 56. In a state where the connecting bar end portion 56b is expanded, one connecting bar end portion 56b at one end of the connecting bar 56 engages with a periphery of the nut circumferential groove 12b, and the other connecting bar end portion 56b at the other end of the connecting bar 56 engages with a periphery of the seat member circumferential groove 11b.

The connecting bar 56 penetrates a hole 59 formed in the radially inner portion of the elastic deformation ring 21. A diameter of the hole 59 is larger than a diameter of the connecting bar rod portion 56a and is smaller than a diameter of the connecting bar end portions 56b of the connecting bar 56. The connecting bar 56 is caused to penetrate the hole 59 before the end portions 56b are expanded. After the end portions 56b are expanded, the end portions 56b which engage the circumferential grooves 12b and 11b cannot pass through the hole 59, so that the ring assembly 13, the fastening nut 12 and the seat member 11 can not be disassembled.

With respect to functions and technical advantages of Embodiment 9 of the present invention, since the ring assembly 13 includes the elastic deformation ring 21 only, the first axial force control ring 20 and the second axial force control ring 23 can be removed, whereby the structure of the ring assembly 13 can be simplified. Further, by confirming whether or not the gap 64 between the radially outer portion of the elastic deformation ring 21 and the seat member 11 is zero, it can be easily acknowledged whether or not the bolt fastening force becomes proper.

## Claims

1. An axial force control nut assembly comprising:
a seat member;
a fastening nut rotatable relative to the seat member; and
a ring assembly disposed between the seat member and the fastening nut.

2. An axial force control nut assembly according to claim 1, wherein the ring assembly includes a first axial force control ring which is free in rotation before a bolt axial force reaches a proper axial force and is restricted in rotation when or after the bolt axial force reaches the proper axial force.

3. An axial force control nut assembly according to claim 2, wherein the ring assembly includes an excessive axial force detecting structure for detecting that the bolt force reaches an excessive axial force which is larger than the proper axial force.

4. An axial force control nut assembly according to claim 2, further comprising a connecting structure which connects at least two members among at least a portion of the ring assembly, the seat member and the fastening nut so that the at least two members are not separated from each other.

5. An axial force control nut assembly according to claim 2, wherein the fastening nut includes a protrusion protruding toward the ring assembly and integral with the fastening nut.

6. An axial force control nut assembly according to claim 3, wherein the excessive axial force detecting structure includes a groove formed in the first axial force control ring, the first axial force control ring being broken at the groove when the bolt axial force reaches the excessive axial force, so that a portion of the first axial force control ring radially outside the groove is rotatable relative to a portion of the first axial force control ring radially inside the groove, whereby it is acknowledged that the bolt axial force was reached the excessive axial force.

7. An axial force control nut assembly according to claim 3, wherein the excessive axial force detecting structure includes a second axial force control ring which is free in rotation before the bolt axial force reaches the excessive axial force larger than the proper axial force and is restricted in rotation on or after the bolt force reaches the excessive axial force, the second axial force control ring being disposed apart from the first axial force control ring.

8. An axial force control nut assembly according to claim 3, wherein the excessive axial force detecting structure includes a second axial force control ring which is free in rotation before the bolt axial force reaches the excessive axial force larger than the proper axial force and is restricted in rotation on or after the bolt force reaches the excessive axial force, the second axial force control ring being disposed adjacent the first axial force control ring.

9. An axial force control nut assembly according to claim 3, wherein the excessive axial force detecting structure includes a second axial force control ring which is free in rotation before the bolt axial force reaches the excessive axial force larger than the proper axial force and is restricted in rotation on or after the bolt force reaches the excessive axial force, the second axial force control ring being disposed adjacent the first axial force control ring, and
wherein the ring assembly includes an elastic deformation ring, the first axial force control ring and the second axial force control ring, wherein
a first gap between the elastic deformation ring and the first axial force control ring becomes zero when the bolt axial force is equal to or greater than the proper axial force,
a second gap between the first axial force control ring and the second axial force control ring becomes zero when the bolt axial force is equal to or greater than the excessive axial force.

10. An axial force control nut assembly according to claim 9, wherein the second axial force control ring includes a seal ring groove formed in a surface of the second axial force control ring opposing the first axial force control ring and extending in an entire circumference, and the ring assembly further comprises an elastic seal ring being fit in the seal ring groove.

11. An axial force control nut assembly according to claim 4, wherein the connecting structure includes an axially extending portion which is formed in a radially inner portion of one of the members among at least a portion of the ring assembly, the seat member and the fastening nut, the axially extending portion axially extending to a position radially inside a radially inner portion an adjacent one of the members, the axially extending portion being deformed radially outwardly so that the axially extending portion axially engages with the radially inner portion of the adjacent one of the members.

12. An axial force control nut assembly according to claim 4, wherein the connecting structure includes: a concave portion formed at a surface of one of the members among at least a portion of the ring assembly, the seat member and the fastening nut; and a convex portion formed at a surface of an adjacent one of the members, and
wherein the concave portion has a narrowed inlet, the convex portion having a tip end greater in width than the inlet of the concave portion, the convex portion having a gap between the tip end and an inside surface of the concave portion, the convex portion being forcibly inserted into the concave portion by being imposed with an axial load.

13. An axial force control nut assembly according to claim 4, wherein the connecting structure includes:
a radially inner protrusion and a radially outer protrusion formed at a surface of one of the members among at least a portion of the ring assembly, the seat member and the fastening nut and extending toward an adjacent one of the members; and
a radially inner concave portion, a radially outer concave portion and a central protrusion, respectively, formed at a surface of the adjacent one of the members, the radially inner concave portion having a radially inner tapered surface, the radially outer concave portion having a radially outer tapered surface, the central protrusion being formed between the radially inner concave portion and the radially outer concave portion and extending axially toward the one of the members,
wherein the radially inner tapered surface deforms the radially inner protrusion radially outwardly when the radially inner protrusion is pushed against the radially inner tapered surface, and the radially outer tapered surface deforms the radially outer protrusion radially inwardly when the radially outer protrusion is pushed against the radially outer tapered surface, a radial space between a tip of the radially inner protrusion and a tip of the radially outer protrusion after the radially inner protrusion and the radially outer protrusion are deformed is smaller than a radial width of a tip of the central protrusion.

14. An axial force control nut assembly according to claim 4, wherein the fastening nut includes a protruding portion protruding toward the ring assembly,
the connecting structure connecting the ring assembly and the seat member so that the ring assembly and the seat member can not be disassembled and combining the ring assembly and the fastening nut so that the ring assembly and the fastening nut can not be disassembled.

15. An axial force control nut assembly according to claim 4, wherein the connecting structure includes:
a radially outer protrusion and a radially inner concave formed at a surface of one of the members among at least a portion of the ring assembly, the seat member and the fastening nut, the radially outer protrusion extending toward an adjacent one of the members, the radially inner concave being formed radially inside the radially outer protrusion and having a radially inner tapered surface; and
a radially inner protrusion and a radially outer concave formed at a surface of the adjacent one of the members, the radially inner protrusion extending toward the one of the adjacent members, the radially outer concave being formed radially outside the radially inner protrusion and having a radially outer tapered surface,
wherein the radially inner tapered surface deforms the radially inner protrusion radially outwardly when the radially inner protrusion is pushed against the radially inner tapered surface, and the radially outer tapered surface deforms the radially outer protrusion radially inwardly when the radially outer protrusion is pushed against the radially outer tapered surface, a tip of the radially inner protrusion and a tip of the radially outer protrusion after the radially inner protrusion and the radially outer protrusion are deformed interfere with each other in an axial direction so that the one of the members and the adjacent one of the members can not be disassembled.

16. An axial force control nut assembly according to claim 4, wherein the connecting structure includes a connecting bar extending between the fastening nut and the seat member opposing each other via the ring assembly and connecting the fastening nut and the seat member,
the fastening nut having a nut circumferential groove and the seat member having a seat member circumferential groove,
the connecting bar including a connecting bar rod portion and a connecting bar end portion at each of opposite ends of the connecting bar rod portion, the connecting bar end portion extending radially outwardly more than an outside diameter of the connecting bar rod portion, one connecting bar end portion at one end of the connecting bar engaging with the nut circumferential groove, the other connecting bar end portion at the other end of the connecting bar engaging with the seat member circumferential groove.

17. An axial force control nut assembly according to claim 16, wherein the ring assembly includes an elastic deformation ring which has an axially penetrating hole between the an inside diameter and an outside diameter of the elastic deformation ring,
the connecting bar penetrating the hole formed in the elastic deformation ring,
opposite ends of the connecting bar being expanded by loading an axial force on the connecting bar.

18. An axial force control nut assembly according to claim 16, wherein the ring assembly includes an elastic deformation ring which has no axially penetrating hole between an inside diameter and an outside diameter of the elastic deformation ring,
the connecting bar being divided into a first connecting bar portion and a second connecting bar portion, the first connecting bar portion being adhered to one surface of the elastic deformation ring, the second connecting bar portion being adhered to the other surface of the elastic deformation ring,
opposite ends of the connecting bar being expanded by loading an axial force on the connecting bar.

19. An axial force control nut assembly according to claim 16, wherein the ring assembly includes an elastic deformation ring which has no axially penetrating hole between the an inside diameter and an outside diameter of the elastic deformation ring,
the connecting bar holding the elastic deformation ring and being fixed to the elastic deformation ring, the connecting bar including a first connecting bar portion located on one side of the elastic deformation ring, a second connecting bar portion located on the other side of the elastic deformation ring, and a connecting portion connecting the first connecting bar portion and the second connecting bar portion, the connecting bar portions being formed by bending the first and second connecting bar portions.

20. An axial force control nut assembly according to claim 1, wherein the ring assembly includes an elastic deformation ring, wherein a gap exists between a radially outer portion of the elastic deformation ring and the seat member before the bolt axial force reaches the proper axial force, and the gap between the radially outer portion of the elastic deformation ring and the seat member becoming zero when the bolt axial force is equal or greater than the proper axial force.
